# EUROPEAN PATENT SPECIFICATION

(11) **EP 3 857 092 B1**
(45) Date of publication and mention of the grant of the patent: **04.12.2024**
(21) Application number: 18785869.1
(22) Date of filing: 28.09.2018
(51) Int. Cl.: F16D 65/00, F16J 15/52, F16J 3/04

(54) **IMPROVED FLEXIBLE DUST BOOT FOR AUTOMOTIVE BRAKE CYLINDER**
VERBESSERTE FLEXIBLE STAUBMANSCHETTE FÜR KRAFTFAHRZEUGBREMSZYLINDER
PARE-POUSSIÈRE FLEXIBLE AMÉLIORÉ POUR CYLINDRE DE FREIN DE VÉHICULE AUTOMOBILE

(43) Date of publication of application: 04.08.2021
(73) Proprietor: Continental Automotive Technologies GmbH, 30175 Hannover (DE)
(72) Inventor: SALVO, Andrea, 60488 Frankfurt am Main (IT); MAGINI, Libero, 60488 Frankfurt am Main (IT)
(74) Representative: Continental Corporation
(86) International application number: PCT/EP2018/076450
(87) International publication number: WO 2020/064124

(56) References cited:
- EP-A1- 1 441 140
- WO-A1-02/44580
- WO-A1-2010/009884
- WO-A1-99/00617
- CN-Y- 2 490 034
- DE-A1- 3 111 576
- DE-C2- 3 111 576
- FR-A1- 2 973 462
- KR-U- 19990 032 383
- US-A- 3 187 848
- US-A- 3 187 848
- US-A1- 2013 068 576
- US-B1- 7 708 121

## Description

The present invention relates to a resilient boot sealing system for an automotive wheel brake actuation cylinder. Such wheel brake cylinders are generally fix with a stator e.g. mounted fix to an axle, anchor plate or else and may be embodied as hydraulic, electric or mechanic actuator including a relatively movable actuation member for initiating spread operation between brake pads, such as brake shoes. More specifically and besides to disk brakes conventional drum brakes for vehicles are widely known and often comprise hydraulic wheel brake cylinder with a housing, hydraulic pressure chamber and mostly two hydraulically actuated diametrically working pistons as the responsible actuation members for spreading brake shoes. Each piston performs in form of a displaceable wall that limits the hydraulic fluid volume capacity in the pressure chamber of the housing. With this respect the hydraulic pistons spread between two brake shoes under hydraulic pressure when the drum brake system is applied, i.e. when operator performs brake actuation with a man-machine-interface (e.g. lever, pedal, button) or whenever the brake system is automatically applied. A parking brake function mode may operate with the same cylinder together with added self locking means. Consequently the brake shoes are urged to get in frictional contact with the sliding surface of the rotating brake drum. Pretensioned return springs serve for return/retention of the brake shoes including pistons when the drum brake is released.

Irrespective of concrete brake type or cylinder type (electric, hydraulic, mechanic) any relative displacement between housing and actuation member requires a gap inbetween and that gap requires a sealing system which includes a flexible boot comprising interfaces concerning the periphery with bellows arranged between the said interfaces so that ingress of foreign substance is flexibly avoided. A general problem with respect to those cylinders is their inexpensive durability under improved resistance against corrosion. That task is not easy to achieve because wheel cylinder are mostly located in relatively basic (low level) niches which means that the cylinders are placed in an area which is exposed to weather and dirt. Well protection against contamination with foreign substance, such as dirt, fluid, gravel or mixtures thereof is key. A conventional dust boot is an example for regular components of conventional wheel cylinders on hydraulic drum brakes, electric parking brakes and combined brakes. Such boot is responsible to avoids dust entrance to the wheel cylinder interior. That prevents damages concerning sealing or guidance between actuation member (mostly a hydraulic sealed piston) and cylinder. A defective boot may cause con-tamination of hydraulic brake fluid or risk that brake fluid leaks and spoils the exterior. High pressure spray cleaning systems may be of significant danger due to possible ingress of cleaning fluids. While most known hermetically closed cylinder sealing systems fulfil the major sealing requirements sufficiently, at least as far as protection against ingress of foreign substance is concerned, some new test results show possible drawbacks, especially under service brake applications, including deficits under high temperature use in connection with air or gas that may be enclosed in a room under the bellows of the boot. Under exposure to exhaustive brake operation and/or extreme environmental conditions and or limited cooling the temperature in the interior of a drum brake wheel cylinder can increase above 120°C. Such increase of temperature together with conventional hermetically closed boots may lead to an increase of internal pressure in the room formed in between boot, actuation member (piston) and housing. With increasing of the temperature (pressure) in the interior of the room, conventional boot expands in balloon-like manner due to the thermal expansion. Such additional stress may either promote the boot interfaces flipping out of their seat or alternatively may cause fatal error due to rupture of the elastomere boot. The both errors end in handicapped sealing functions.

In improving sealing JP 3938236 B2 discloses a drum brake cable actuation interface member with a sealing system including a boot device that comprises two interface sections that are each mounted from radially outwards (centered radially outwardly) on periphery and wherein one of the interface sections is perforated. The flexible boot has bellows between the interface sections and allows relative displacement between actuation member and housing. Brake cable linkage may be introduced from a backside of the housing. The interface section integrates a tiny through hole orifice, which provides constant pressure equalization between internal and external of the boot. Consequently such hermetically open boot design avoids uncontrolled flipping action. For this reason an extra supplemental shielding wall is suggested, which is arranged on the radially outer housing interface portion of the boot, for extra protection against ingress of rainwater or spray water e.g. washing fluids.

US 3,187,848 discloses heat resistive and also robust mounting improvement for drum brake wheel cylinders together with a housing having a cylinder bore provided therein, a piston operable in said bore and forming therewith fluid pressure chamber, one end of said housing adjacent said cylinder having a cylindrical recess formed therein of larger length and diameter than said cylinder bore whereby a protective shoulder is provided, the annular inner surface of said recess having a predetermined controlled micro finish of greater roughness than said cylinder bore, a link pin in engagement with said piston and extending through and beyond said cylinder for actuation of a brake shoe, so that an annular wheel cylinder boot is integrated in the housing. The packaging, especially the length of the assembly, is improvable and test programs reveal weakness with respect to protection against contamination, especially weakness in protection against ingress of fluids like rainwater, pressurized spray washing water or weakness in passing salt-spray-corrosion-tests. That weakness appears in connection with uncontrolled flipping of the boot.

EP 1 441 140 A1 discloses a boot-type seal having a seal and a valve. The seal has a first seal member which is configured to sealingly engage a first surface, and a second seal member which is configured to sealingly engage a second surface. The valve is coupled to the seal and is operable in a first condition, which inhibits fluid communication therethrough, and a second condition, which permits fluid communication therethrough. The condition of the valve changes from the first condition to the second condition in response to a fluid pressure exerted on a side of the seal that exceeds a predetermined threshold pressure. A brake assembly that incorporates the boot-type seal is also disclosed in this document.

WO 2010/009884 A1 discloses bellows (2), situated on a guide member of a disc brake, the end of said bellows comprising a continuous sealing lip, which in a functional position sealingly abuts the guide member. The bellows is designed such that the sealing lip is rigidly connected to the adjacent series of folds.

FR 2 973 462 A1 describes a disc brake piston cap interposed between a caliper and a piston to protect the piston. The cap comprises a bead with the inner ply engaged in the groove of the piston and a molded insert fixed to the annular groove of the caliper.

US 3 187 848 A discloses a brake wheel cylinder assembly comprising a housing having a cylinder bore provided therein, a piston operable in the bore and forming therewith fluid pressure chamber, one end of the housing adjacent of the cylinder having a cylindrical recess formed therein of larger diameter than the cylinder bore, and whereby a shoulder is provided.

CN 24 90 034 Y discloses a hydraulic brake double-piston wheel cylinder for vehicle, which consists of a cylinder body, a piston provided with a seal, a spring, a sealing component, a top block, a shield, an oil inlet hole, an air bleed hole and an air bleed valve.

US 2013 068 576 A1 shows a drum brake comprising a backing plate installed opposite a drum that rotates along with a wheel, a pair of brake shoes installed in both sides of the drum to generate brake force via friction with an inner surface of the drum when pushed outward, and a wheel cylinder located between one end of each of the pair of brake shoes to push the pair of brake shoes outward. Break pistons are provided with seals.

KR 1999 003 2383 U discloses a drum brake with brake pistons provided with seals.

An object of the present invention is a sealing system improvement, together with optimized thermal design. Specific further object is improvement in protection against ingress of foreign substance e.g. fluid which means inhibit internal corrosion or spoil. Consequently improved substance protection against ingress of foreign substance, while avoiding the drawbacks of the prior art are major objects of the present invention. Also an actualized, reasonable, easy to mount, valuable and by the way cost responsible designchange concerning the sealing system is requested, which especially avoids risk for ingress of substance when flipping action occurs.

According to the present invention, all problems are solved by a sealing system that is provided with pressure relief valve means and with integrated pressure relief valve function which is normally closed and automatically and temporarily changes in a controlled, limited and also reversible manner into open status for pressure relief when pressure is not equal between interior and exterior. Accordingly the invention provides for pressure balance between interior and exterior. Balance avoids or limits boot deformation and consequently flipping of the boot. The invention is linked with the exclusive benefit, that dust boot drop out from cylinders exterior housing seat is effectively eliminated.

More specifically the pressure relief valve mode is changed automaticly, selfdriven, without supply of external energy, especially currentless but still in a predetermined, controlled matter, so that the benefits are earned suprisingly simple in serial applications.

The pressure relief means of the sealing system integrates relief valve spring elasticity wherein the relief valve elasticity which is integrated in the elastomere, flexible dust boot, and that peripheral interface of the dust boot integrates relief valve body means, so that a part of the radially grooved counterpart seat of housing and/or acutating member/piston integrates a relief valve seat of the respective relief valve. In more detail the pressure relief valve body in the interface section of the boot may be configured as a separate recessed portion of the boot, and wherein the recessed portion is connected with interior but separated from exterior. Consequently the periphery of the boot may be unchanged and all mechanical design change may con- centrated on a change of the elastomeric boot. When the boot is made from rubber or other elastomere material, such designchange is relatively easy so that a cheap change of the boot during maintenance will allow that conventional cylinders (including their periphery) will effectively earn all benefits of the present invention.

Proslotion a tooling of the boot is simplyfied, as the boot according to the invention includes a recessed portion in its interface section, that is embodied as a longitudinal slot section which is arranged in parallel or antiparallel with the linear displacement direction of the actuation member. The effect of the latter is an extended slot length so that improved sealing function against ingress of foreign substance is achieved.

Elasticity in valve function is easily changed by simple change of thickness of an orthogonally arranged end wall/diaphragm. The end wall/diaphragm is provided with a specific, given resilience, and that the resilience of the end wall corresponds with the necessary elasticity of the relief valve means. Consequently the end wall may be designed with reduced wall thickness in compare with an average wall thickness of the boot.

Performance of the relief valve may effectively be improved when an interface portion integrates multiple recessed portions and/or slot sections. The same applies when pressure relief valve means are integrated only on the first interface portion,or integrated only on the second interface portion or alternatively integrated on both interface portions. Further adaption is possible, when multiple slot sections and/or interface portions are regularily arranged, especially under equivalent distance and with equivalent angle to each neighbour on the boot. It is further beneficial when pressure relief valve means are in- tegrated in all interface sections of a boot.

### Brief Description of the Drawings

Fig. 1 is an isometric sectional view depicting a first embodiment of a hydraulic wheel cylinder with sealing means according to the present invention and when actuation members (pistons) are fully retracted,
Fig. 2 shows the same cylinder as in Fig. 1 with expanded compression spring between the both actuation members,
Fig. 3 is an exploded isometrical view of the cylinder components,
Fig. 4 is an exploded isometrical view of parts that form the both actation members of the cylinder in Fig. 1,
Fig. 5b is an enlarged, transverse, sectional detail view concerning cylinder and boot details as marked Vin Fig. Sa concerning the first embodiment,
Fig. 6a is an enlarged front view and Fig. 6b is an isometric view of the boot with integrated slots in its second, radial inner, interface area (first embodiment),
Fig. 7 is an enlarged, transverse, sectional view concerning cylinder and boot details as marked Vin Fig. 2 concerning an embodiment according to the invention (integrated slots in first, radial outer, interface area),
Fig. 8a,b is an enlarged front view and Fig. 8b) is an isometric view of the boot embodiment in Fig. 7 comprising integrated slots in its first interface area (embodiment according to the invention),

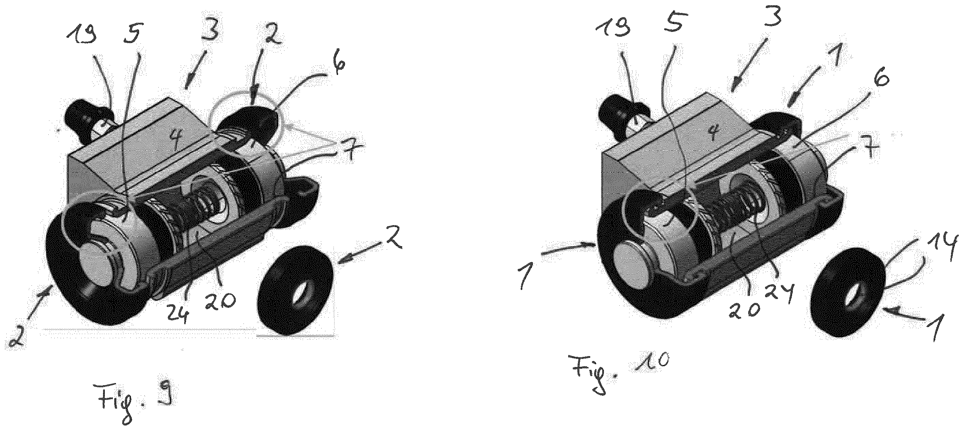

Fig. 9 + 10 comparision of the both cylinder embodiments in isometric sectional view and their respective boot embodiments in isometric view, and
Fig. 11 a,b + 12 a,b further variation in embodiments comprising antiparallel (inclined) slot (Fig. 11 a, b - in sectional view) and irregular positioned slots (Fig. 12 a, b - isometric view).

Although a broad variety of other applications in other brake system arrangements and applications remain still possible, the invention is explained in more detail with focus on one preferred example concerning boot embodiments 1,2 as applicable in a drum brake wheel cylinder arrangement, which is explained in more detail in the following detailed description of the drawing.

A drum brake system according to the present invention may principally be designed in simplex, duplex, duo-servo or other constructive mechanical configuration. A drum brake systems according to the invention may generally be operated in different functions according to very different functional modes e.g. in service brake mode and/or in self-locking parking brake mode, and/or in emergency brake mode in redundancy to a service brake system.

A drum brake system comprises two opposed and relatively to each other expandable brake shoes that may frictionally cooperate in brake actuation with the circumferential friction surface of a rotatable brake drum that stands in association with a rotatable vehicle wheel (not shown). A wheel cylinder 3 is configured as linear drive, e.g. expander that may include hydraulic, mechanic and/or electromechanical subsystems e.g. an electromotive actuator with drive train e.g. gears in stages and /or rotation-to translation exchange, together with other suitable brake periphery e.g. drum brake linkage means. Each cylinder 3 comprises at least single or opposed displaceable actuation members 5,6.

The cylinder 3 is generally rotationally fix to a drum brake stator which may be designed in typical anchor plate shape or alternatively designed as axle component. In the preferred embodiment the cylinder 3 may be designed as a hollow solid body arranged with mechanical interface with comprising the mounting socket 16 and integrated internal thread 17 for externally
threaded mounting means such as screws. In case of electric and/or hydraulic drive means configuration each cylinder is arranged with electric and/or hydraulic port means 18 that may be designed as interface connector e.g. internal thread, bleeding valve means 19 in the vertically uppermost portion of a hydraulic chamber 20, the hydraulic chamber 20 standing in permanent hydraulic connection with the hydraulic port 18, longitudinal cylinder bore 21 and also with two opposed hydraulic action member pistons that are allocated for sealed axial relative displacement within the cylinder bore. Each actuation member piston carries its own sliding lip seal member 22,23. Finally a compression spring member 24 may be allocated interposed in axially between the two actuation member pistons so that the both pistons are generally and flexibly spread apart from each other for safeguarding the nominal hydraulic chamber volume when the brake system remains driveless under brake release condition. The ends of the compression spring member 24 may be allocated in opposed blind bores 25,26 of the both actuation member pistons.

The cylinder comprises an annular flexible ring shape sealing boot 1,2 that integrates at its first end a housing interface 9 including a radially inwardly directed flange 27 which is elastically snapped and thereby sealingly allocated in a radially lowered position from radially outwardly into a radial groove of a seat 12 that is arranged on the outer surface of the expander housing 4. A second end of the ring shape sealing boot 1,2 is configured with a member interface 10 including a radially inwardly directed flange 28 that is elastically snapped and thereby sealingly allocated in a radially lowered position from radially outwardly into a groove of a seat 13 that is arranged on an outer surface of the actuating member (piston) 5,6. Consequently the both seats 12,13 and interface portions 9,10 form an overlapping, lowered, meander-shape mechanical interacting sealing system for improved mechanical spray water resistance, which is additive to flexible, elastomere sealing means/functions that are integrated in each flange 27,28 of the boot 1,2. Consequently the described sealing system provides the generally hermetical (dustproof, liquidtight, gastight) sealing function between interior (e.g. "dry" room 11,11') and exterior E.

An interface 9,10 of the boot additionally comprises normally closed pressure relief valve means and implicit pressure relief valve function which means that the valve body automatically and temporarily changes in predetermined position into open status under a pressure gradient decline in direction from interior of room 11,11' to exterior E with respect to the room 11,11' which is separated inbetween boot 1,2 and housing 4. Consequently the sealing system allows predetermined, controlled and by this way also limited, directed, overpressure release e.g. gas blow out from the room 11,11'into the exterior E. In more detail a very specially designed section of the boots flanges 27,28 manages directed blow out when integrating additional feature and function, as its valve body is temporarily allowed to be temporarily lifted above its opposed valve seat nutground section. The process is ended when the bootintegrated elastomere check valve function terminates as it closes under equal pressure between room 11,11' interior and exterior E. With other words the boots 1,2 "valve body" flange portion automatically returns after blow out into its sealed normally closed sealing position with respect to the seat 12,13 in the nutground section. All that function is performed automatically with elastomere elasticity of the inventive boot 1,2 only under the influence of pres- suregradient. Consequently the invention works selfmotivated, without supply of external energy, especially currentless. In the embodiment according to the present invention the pressure relief valve body (flange portion) of the boot integrates a separate recessed slot/channel shape section 14, and wherein that recessed portion 14 is normally connected with internal room 11,11' and also normally sealingly separated from exterior Eby flexible, thinned diaphragm/end wall 15. The radially inner, integrated, recessed, portion 14 in the flange 27,28 is embodied as a longitudinal slot section which is arranged in parallel with the axial, linear displacement direction of the actuation member 5,6 and wherein each diaphragm is arranged as a flexible end wall 15 that is arranged generally orthogonal with respect to the axial axis of displacement. Each end wall 15 is provided with a specific, predetermined re- silience, and that the resilience of the diaphragm/end wall 15 corresponds with the necessary elasticity with respect of the pressure difference control. The end wall/diaphragm 15 may especially be designed with reduced wall thickness in compare with an average wall thickness dm of the boot 1,2. An interface section 9,10 of a boot 1,2 may comprise multiple pressure relief valve sections, which means that one interface portion 9,10 may integrate multiple recessed portions 14 and/or slot sections. In 20 this case the multiple valve body portions/slot sections 14 are preferably regularily arranged, and they may especially be under equal distance and in circumferential direction be arranged with equal angle to each other/neighbour slot. The behaviour of the valve function may be influenced by the overall number of the slots, the area/size of the slots, and the elasticity of their diaphragm/end wall 15.

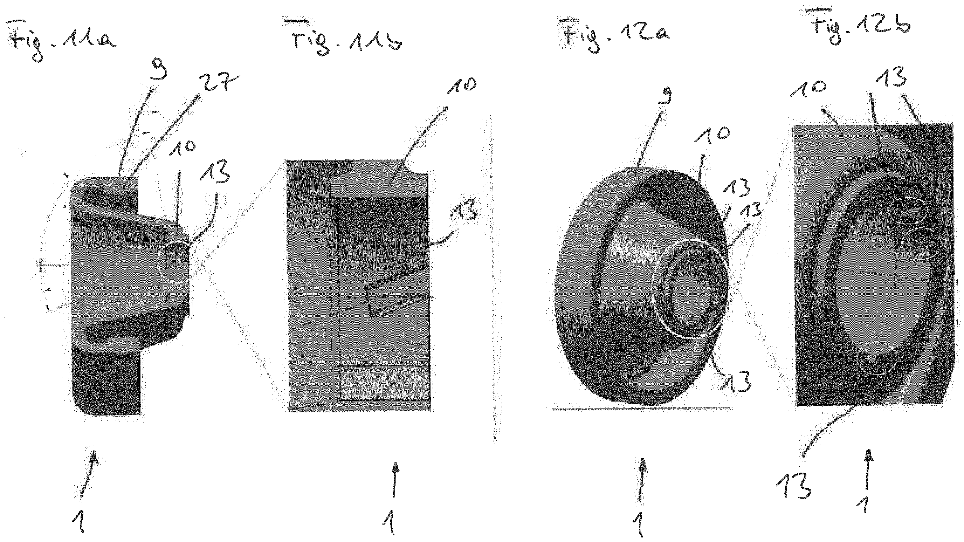

Fig. 11 and 12 concentrate on further valuable detail variations with respect to a boot 1 that are disclosed in example in connection with the first embodiment of the boot 1. More specifically Fig. 11 a,b show antiparallel slot 13 design modification comprising inclined slot orientation with regard to the central axis of displacement. Fig. 12 a,b disclose irregular applications of the inclined slot 13 design modification. It is clear that all disclosed features in examples, embodiments and modifications may be combined in variety, also in connection with the boot 2 embodiment.

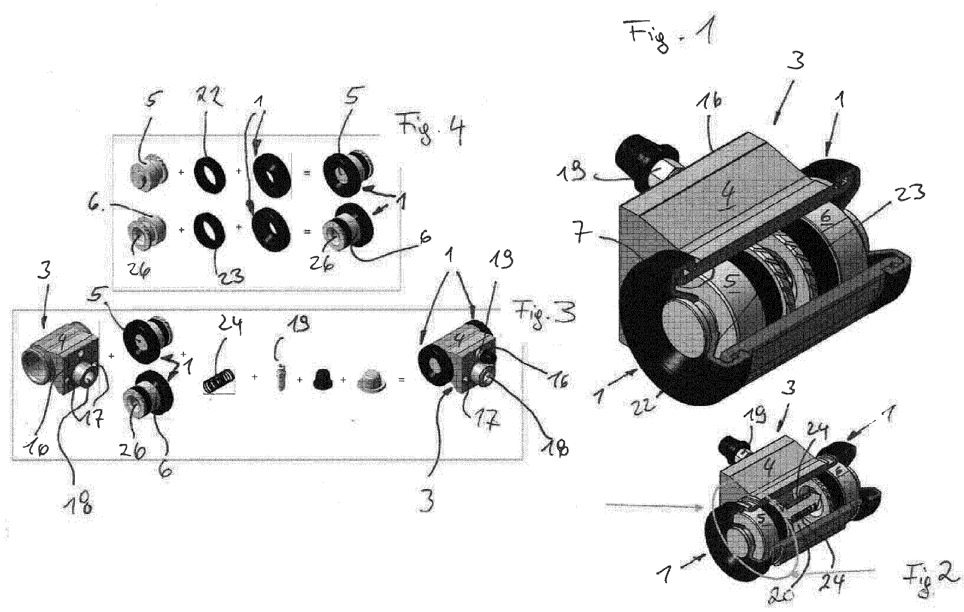

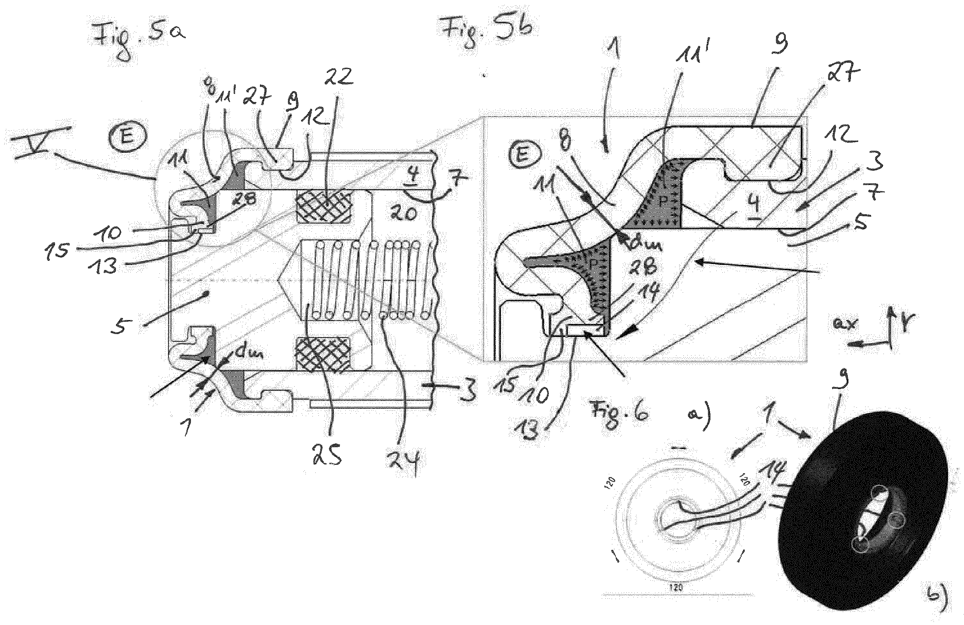

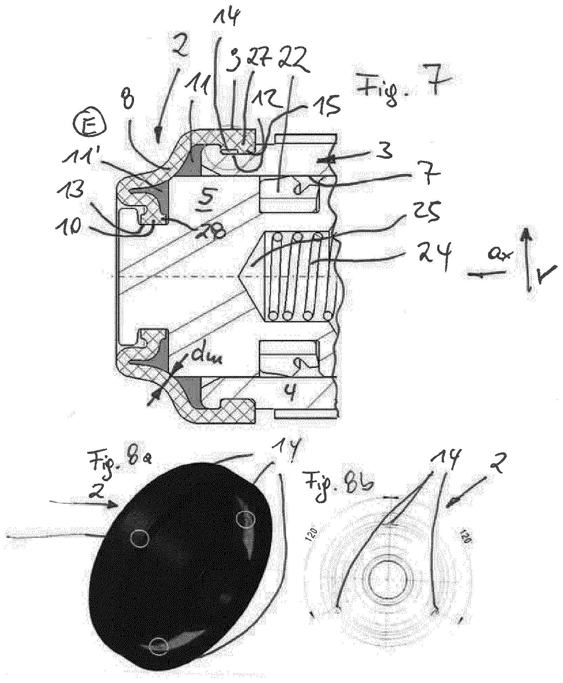

Still further various modifications, alternatives and embodiments of the disclosed features remain possible. Consequently the pressure relief valve means may be integrated within the second interface portion 10 of boot 1 only (as shown in Fig. 1-5), or the relief valve means may be integrated in the first interface portion 10 of boot 2 only (as shown in Fig. 7+8). In alternative embodiment all interface portions 9,10 of a boot may include pressure relief valve means so that uncontrolled displacement (flipping) of the dust boot is most effectively avoided.

### References

1,2 Boot
3 cylinder
4 housing
5, 6 actuation member
7 cylinder bore
8 bellows
9,10 interface portion
11,11' room
12,13 seat
14 recessed portion/slot
15 end wall
16 mounting socket
17 internal thread
18 hydraulic port
19 bleeding means
20 hydraulic chamber
21 longitudinal cylinder bore
22,23 lip seal
24 compression spring
25,26 blind bore
27,28 flange
E exterior
Ax axial direction
R radial direction
dm average thickness

## Claims

1. Flexible dust boot (1,2) for automotive brake cylinder (3), wherein the cylinder (3) has a housing (4) and drive means for linear actuation of a linear actuation member (5, 6) that is disposed in a cylinder bore (7) of the housing (4), and the linear actuation member (5, 6) relatively movably guided with respect to the housing (4), with the boot (1,2) comprising flexible bellows (8) between two concentrical interface portions (9, 10) with different diameter for flexible sealed protection of an internal room (11) that is separated from an exterior surrounding by the boot (1,2), so that the boot (1,2) provides sealed relative displacability between actuation member (5, 6) and housing (4), and protects against ingress of foreign substance from exterior to interior of the housing (4), and wherein the both interface portions (9, 10) rest from radially outwards on their respective counterpart seats (12, 13) in grooves on housing (4) and actuation member (5, 6), said interface portions (9, 10) respectively including a radially inwardly directed flange (27, 28) which is elastically snapped and thereby sealingly allocated in a radially lowered position from radially outwardly into a radial groove of the seat (12, 13), whereby the boot (1,2) is provided with pressure relief valve means and with integrated pressure relief valve function which automatically and temporarily changes into open status under a pressure gradient decline in direction from interior to exterior, with respect to the boot (1,2), whereby the pressure relief valve body in the interface section (9,10) of the boot (1,2) integrates a separate recessed portion (14), and wherein the recessed portion (14) is connected with interior but separated from exterior, whereby the recessed portion (14) in the interface portion (9,10) is embodied as a longitudinal slot section which is arranged antiparallel or in parallel with respect of the linear displacement direction of the actuation member (5, 6), the recessed portion (14) is separated from exterior via an end wall (15) of the flange (27, 28), and wherein the end wall (15) is arranged orthogonally with respect to the linear displacement direction of the actuation member (5, 6).

2. Flexible dust boot (1,2) for automotive brake cylinder (3) according to claim 1, **characterized in that** the pressure relief valve means is normally closed, especially in case of equal, and especially in case of balanced, pressure between interior and exterior.

3. Flexible dust boot (1,2) for automotive brake cylinder (3), according to claim 1 or 2, **characterized in that** a pressure relief valve is controlled under pressure difference, automaticly, selfdriven, without supply of external energy, especially currentless.

4. Flexible dust boot (1,2) for automotive brake cylinder (3) according to one or more of the preceding claims 1 - 3, **characterized in that** the sealing system is designed generally fluidtight, hermetically closed, especially without any direct connection e.g. through hole or puncture between interior and exterior.

5. Flexible dust boot (1,2) for automotive brake cylinder (3), according to one or more of the preceding claims 1-4, **characterized in that** the pressure relief means of the sealing system integrates relief valve spring elasticity which relief valve elasticity is integrated in the flexible boot (1,2), and that an interface (9,10) of the boot (1,2) integrates a relief valve body, and that a part of the radially grooved counterpart seat (12,13) integrates a relief valve seat of the relief valve.

6. Flexible dust boot (1,2) for automotive brake cylinder (3) according to one of the claims 1-5, **characterized in that** the end wall (15) is provided with a specific, given resilience, and that the resilience of the end wall (15) corresponds with the necessary elasticity with respect to the pressure gradients that acutate the relief valve means.

7. Flexible dust boot (1,2) for automotive brake cylinder (3) according to one of the claim 1 to 6, **characterized in that** the end wall (15) is designed with reduced wall thickness in compare with an average wall thickness of the boot (1,2).

8. Flexible dust boot (1,2) for automotive brake cylinder (3) according to one or several of the preceding claims 1-7, **characterized in that** an interface portion (9,10) integrates multiple recessed portions (14) and/or slot sections.

9. Flexible dust boot (1,2) for automotive brake cylinder (3) according to claim 8, **characterized in that** multiple slot sections and/or recessed portions (14) are regularily arranged, especially under equal distance and in circumferential direction in equal angle to each other neighbour recessed portion (14).

10. Flexible dust boot (1,2) for automotive brake cylinder (3) according to one or more of the preceding claims 1-9, **characterized in that** pressure relief valve means are integrated only in the first interface portion (9), or integrated only in the second interface portion (10) or alternatively integrated in the both interface portions (9,10) of each boot (1,2).

11. Flexible dust boot (1,2) for automotive brake cylinder (3) according to one or more of the preceding claims 1-10, **characterized in that** the pressure relief valve means is integrated at least partly in all both interface portions (9,10).

12. Flexible dust boot (1,2) for automotive brake cylinder (3) according to one or more of the preceding claims 1-11, **characterized in that**, a first interface portion (9) of the boot (1,2) is elastically snapped in radially lowered position in an outwardly open radially grooved counterpart seat (12) of an outer face of the housing (4), and that a second interface portion (10) of the boot (1,2) is elastically snapped in radially lowered position in an outwardly open radially grooved counterpart seat (13) that is arranged on an outer face of the actuating member (5, 6).

13. Flexible dust boot (1,2) for automotive brake cylinder (3) according to one or more of the preceding claims 1-12, **characterized in that**, the pressure relief valve is normally hermetically closed.

## Patentansprüche

1. Flexible Staubmanschette (1, 2) für Kraftfahrzeug-Bremszylinder (3), wobei der Zylinder (3) ein Gehäuse (4) und ein Antriebsmittel zum linearen Betätigen eines Linearaktorelements (5, 6) aufweist, das in einer Zylinderbohrung (7) des Gehäuses (4) angeordnet ist, und wobei das Linearaktorelement (5, 6) in Bezug auf das Gehäuse (4) relativ beweglich geführt ist, wobei die Manschette (1, 2) einen flexiblen Balg (8) zwischen zwei konzentrischen Grenzflächenabschnitten (9, 10) mit unterschiedlichem Durchmesser umfasst, um einen Innenraum (11) flexibel abgedichtet zu schützen, der von einer Außenumgebung durch die Manschette (1, 2) getrennt ist, so dass die Manschette (1, 2) ein abgedichtetes relatives Verlagerungsvermögen zwischen dem Aktorelement (5, 6) und dem Gehäuse (4) bereitstellt und vor dem Eindringen von Fremdstoffen von außerhalb in das Innere des Gehäuses (4) schützt, und wobei die beiden Grenzflächenabschnitte (9, 10) von radial auswärts in Rillen am Gehäuse (4) und dem Aktorelement (5, 6) auf ihren entsprechenden Gegensitzen (12, 13) aufliegen, wobei die Grenzflächenabschnitte (9, 10) jeweils einen radial einwärts gerichteten Flansch (27, 28) beinhalten, der elastisch eingerastet ist und dadurch abdichtend in einer radial abgesenkten Position von radial auswärts in eine radiale Rille des Sitzes (12, 13) zugeteilt ist, wobei die Manschette (1, 2) mit Überdruckventilmitteln und mit integrierter Überdruckventilfunktion versehen ist, die unter einem Druckgradienten, der in Richtung von innen nach außen in Bezug auf die Manschette (1, 2) abnimmt, automatisch und temporär in einen geöffneten Zustand übergehen, wodurch der Überdruckventilkörper in dem Grenzflächenabschnitt (9, 10) der Manschette (1, 2) einen separaten vertieften Abschnitt (14) integriert und wobei der vertiefte Abschnitt (14) mit dem Inneren verbunden, jedoch vom Äußeren getrennt ist, wodurch der vertiefte Abschnitt (14) in dem Grenzflächenabschnitt (9, 10) als ein länglicher Schlitzabschnitt umgesetzt ist, der in Bezug auf die Richtung linearer Verlagerung des Aktorelements (5, 6) antiparallel oder parallel angeordnet ist, wobei der vertiefte Abschnitt (14) mittels einer Endwand (15) des Flansches (27, 28) vom Äußeren getrennt ist und wobei die Endwand (15) in Bezug auf die Richtung linearer Verlagerung des Aktorelements (5, 6) im rechten Winkel angeordnet ist.

2. Flexible Staubmanschette (1, 2) für Kraftfahrzeug-Bremszylinder (3) nach Anspruch 1, **dadurch gekennzeichnet, dass** das Überdruckventilmittel normal geschlossen ist, insbesondere im Fall von gleichem, insbesondere ausgewogenem Druck zwischen innen und außen.

3. Flexible Staubmanschette (1, 2) für Kraftfahrzeug-Bremszylinder (3) nach Anspruch 1 oder 2, **dadurch gekennzeichnet, dass** ein Überdruckventil unter Druckdifferenz automatisch, selbstangetrieben, ohne Zufuhr externer Energie, insbesondere stromlos, gesteuert wird.

4. Flexible Staubmanschette (1, 2) für Kraftfahrzeug-Bremszylinder (3) nach einem oder mehreren der vorhergehenden Ansprüche 1 bis 3, **dadurch gekennzeichnet, dass** das Dichtungssystem im Allgemeinen fluiddicht, hermetisch verschlossen, insbesondere ohne direkte Verbindung z. B. durch eine Öffnung oder Punktion zwischen innen und außen gestaltet ist.

5. Flexible Staubmanschette (1, 2) für Kraftfahrzeug-Bremszylinder (3) nach einem oder mehreren der vorhergehenden Ansprüche 1 bis 4, **dadurch gekennzeichnet, dass** das Überdruckmittel des Dichtungssystems Überdruckventilfederelastizität integriert, wobei die Überdruckventilelastizität in die flexible Manschette (1, 2) integriert ist, und dass eine Grenzfläche (9, 10) der Manschette (1, 2) einen Überdruckventilkörper integriert, und dass ein Teil des radial gerillten Gegensitzes (12, 13) einen Überdruckventilsitz des Überdruckventils integriert.

6. Flexible Staubmanschette (1, 2) für Kraftfahrzeug-Bremszylinder (3) nach einem der Ansprüche 1 bis 5, **dadurch gekennzeichnet, dass** die Endwand (15) mit einer spezifischen gegebenen Nachgiebigkeit versehen ist und dass die Nachgiebigkeit der Endwand (15) der notwendigen Elastizität hinsichtlich der Druckgradienten entspricht, die das Überdruckventilmittel betätigen.

7. Flexible Staubmanschette (1, 2) für Kraftfahrzeug-Bremszylinder (3) nach einem der Ansprüche 1 bis 6, **dadurch gekennzeichnet, dass** die Endwand (15) mit einer reduzierten Wanddicke im Vergleich zu einer durchschnittlichen Wanddicke der Manschette (1, 2) gestaltet ist.

8. Flexible Staubmanschette (1, 2) für Kraftfahrzeug-Bremszylinder (3) nach einem oder mehreren der vorhergehenden Ansprüche 1 bis 7, **dadurch gekennzeichnet, dass** ein Grenzflächenabschnitt (9, 10) mehrere vertiefte Abschnitte (14) und/oder Schlitzabschnitte integriert.

9. Flexible Staubmanschette (1, 2) für Kraftfahrzeug-Bremszylinder (3) nach Anspruch 8, **dadurch gekennzeichnet, dass** mehrere Schlitzabschnitte und/oder vertiefte Abschnitte (14) regelmäßig angeordnet sind, insbesondere mit gleichem Abstand und in umlaufender Richtung in gleichem Winkel zu ihrem jeweiligen benachbarten vertieften Abschnitt (14).

10. Flexible Staubmanschette (1, 2) für Kraftfahrzeug-Bremszylinder (3) nach einem oder mehreren der vorhergehenden Ansprüche 1 bis 9, **dadurch gekennzeichnet, dass** das Überdruckventilmittel nur in den ersten Grenzflächenabschnitt (9) integriert ist oder nur in den zweiten Grenzflächenabschnitt (10) integriert ist oder abwechselnd in die beiden Grenzflächenabschnitte (9, 10) jeder Manschette (1, 2) integriert ist.

11. Flexible Staubmanschette (1, 2) für Kraftfahrzeug-Bremszylinder (3) nach einem oder mehreren der vorhergehenden Ansprüche 1 bis 10, **dadurch gekennzeichnet, dass** das Überdruckventilmittel zumindest teilweise in alle beide Grenzflächenabschnitte (9, 10) integriert ist.

12. Flexible Staubmanschette (1, 2) für Kraftfahrzeug-Bremszylinder (3) nach einem oder mehreren der vorhergehenden Ansprüche 1 bis 11, **dadurch gekennzeichnet, dass** ein erster Grenzflächenabschnitt (9) der Manschette (1, 2) elastisch in radial abgesenkter Position in einem nach außen offenen radial gerillten Gegensitz (12) einer Außenfläche des Gehäuses (4) eingerastet ist und dass ein zweiter Grenzflächenabschnitt (10) der Manschette (1, 2) elastisch in radial abgesenkter Position in einem nach außen offenen radial gerillten Gegensitz (13) eingerastet ist, der an einer Außenfläche des Aktorelements (5, 6) angeordnet ist.

13. Flexible Staubmanschette (1, 2) für Kraftfahrzeug-Bremszylinder (3) nach einem oder mehreren der vorhergehenden Ansprüche 1 bis 12, **dadurch gekennzeichnet, dass** das Überdruckventil normal hermetisch geschlossen ist.

## Revendications

1. Capuchon pare-poussière flexible (1, 2) pour cylindre de frein d'automobile (3), dans lequel le cylindre (3) a un logement (4) et des moyens d'entraînement pour actionnement linéaire d'un élément d'actionnement linéaire (5, 6) qui est disposé dans un alésage de cylindre (7) du logement (4), et l'élément d'actionnement linéaire (5, 6) est relativement guidé de façon mobile par rapport au logement (4), le capuchon (1, 2) comprenant un soufflet flexible (8) entre deux parties interfaces concentriques (9, 10) avec un diamètre différent pour protection étanche flexible d'un espace interne (11) qui est séparé d'un environnement extérieur par le capuchon (1, 2), de telle sorte que le capuchon (1, 2) fournit une aptitude au déplacement relative étanche entre l'élément d'actionnement (5, 6) et le logement (4), et protège contre l'entrée de substance étrangère depuis l'extérieur jusqu'à l'intérieur du logement (4), et dans lequel les deux parties interfaces (9, 10) reposent depuis un emplacement radialement vers l'extérieur sur leurs sièges équivalents respectifs (12, 13) dans des rainures sur le logement (4) et l'élément d'actionnement (5, 6), lesdites parties interfaces (9, 10) incluant respectivement une bride (27, 28) dirigée radialement vers l'intérieur qui est élastiquement encliquetée et ainsi appliquée de façon étanche dans une position radialement abaissée, depuis un emplacement radialement vers l'extérieur, dans une rainure radiale du siège (12, 13), moyennant quoi le capuchon (1, 2) est pourvu de moyens de soupape de détente de pression et d'une fonction de soupape de détente de pression intégrée qui change automatiquement et temporairement en état ouvert sous un déclin de gradient de pression en direction depuis l'extérieur vers l'intérieur, par rapport au capuchon (1, 2), moyennant quoi le corps de soupape de détente de pression dans la section interface (9, 10) du capuchon (1, 2) intègre une partie évidée distincte (14), et dans lequel la partie évidée (14) est raccordée avec l'intérieur mais séparée de l'extérieur, moyennant quoi la partie évidée (14) dans la partie interface (9, 10) est réalisée sous forme de section fente longitudinale qui est agencée de façon antiparallèle ou en parallèle par rapport à la direction de déplacement linéaire de l'élément actionnement (5, 6), la partie évidée (14) est séparée de l'extérieur par l'intermédiaire d'une paroi d'extrémité (15) de la bride (27, 28), et dans lequel la paroi d'extrémité (15) est agencée orthogonalement par rapport à la direction de déplacement linéaire de l'élément actionnement (5, 6).

2. Capuchon pare-poussière flexible (1, 2) pour cylindre de frein d'automobile (3) selon la revendication 1, **caractérisé en ce que** les moyens de soupape de détente de pression sont normalement fermés, en particulier en cas de pression égale, et en particulier en cas de pression équilibrée, entre l'intérieur et l'extérieur.

3. Capuchon pare-poussière flexible (1, 2) pour cylindre de frein d'automobile (3) selon la revendication 1 ou 2, **caractérisé en ce qu'**une soupape de détente de pression est commandée sous différence de pression, automatiquement, auto-entraînée, sans alimentation en énergie externe, en particulier sans courant.

4. Capuchon pare-poussière flexible (1, 2) pour cylindre de frein d'automobile (3) selon une ou plusieurs des revendications précédentes 1 à 3, **caractérisé en ce que** le système d'étanchéité est conçu de façon généralement étanche aux fluides, fermé hermétiquement, en particulier sans aucun raccord direct par exemple par l'intermédiaire de trou ou de perçage entre l'intérieur et l'extérieur.

5. Capuchon pare-poussière flexible (1, 2) pour cylindre de frein d'automobile (3) selon une ou plusieurs des revendications précédentes 1 à 4, **caractérisé en ce que** les moyens de détente de pression du système d'étanchéité intègrent une élasticité de ressort de soupape de détente, laquelle élasticité de soupape de détente est intégrée dans le soufflet flexible (1, 2), et qu'une interface (9, 10) du capuchon (1, 2) intègre un corps de soupape de détente, et qu'une partie du siège équivalent radialement rainuré (12, 13) intègre un siège de soupape de détente de la soupape de détente.

6. Capuchon pare-poussière flexible (1, 2) pour cylindre de frein d'automobile (3) selon l'une des revendications 1 à 5, **caractérisé en ce que** la paroi d'extrémité (15) est pourvue d'une résilience donnée spécifique, et que la résilience de la paroi d'extrémité (15) correspond à l'élasticité nécessaire par rapport aux gradients de pression qui actionnent les moyens de soupape de détente.

7. Capuchon pare-poussière flexible (1, 2) pour cylindre de frein d'automobile (3) selon l'une des revendications 1 à 6, **caractérisé en ce que** la paroi d'extrémité (15) est conçue avec une épaisseur de paroi réduite en comparaison avec une épaisseur de paroi moyenne du capuchon (1, 2).

8. Capuchon pare-poussière flexible (1, 2) pour cylindre de frein d'automobile (3) selon un ou plusieurs des revendications précédentes 1 à 7, **caractérisé en ce qu'**une partie interface (9, 10) intègre de multiples parties évidées (14) et/ou sections fentes.

9. Capuchon pare-poussière flexible (1, 2) pour cylindre de frein d'automobile (3) selon la revendication 8, **caractérisé en ce que** de multiples sections fentes et/ou parties évidées (14) sont régulièrement agencées, particulièrement à distance égale et en direction circonférentielle à angle égal relativement à chaque autre partie évidée voisine (14).

10. Capuchon pare-poussière flexible (1, 2) pour cylindre de frein d'automobile (3) selon une ou plusieurs des revendications précédentes 1 à 9, **caractérisé en ce que** les moyens de soupape de détente de pression sont intégrés seulement dans la première partie interface (9), ou intégrés seulement dans la seconde partie interface (10) ou en variante intégrés dans les deux parties interfaces (9, 10) de chaque capuchon (1, 2).

11. Capuchon pare-poussière flexible (1, 2) pour cylindre de frein d'automobile (3) selon une ou plusieurs des revendications précédentes 1 à 10, **caractérisé en ce que** les moyens de soupape de détente de pression sont intégrés au moins partiellement dans toutes les deux parties interfaces (9, 10).

12. Capuchon pare-poussière flexible (1, 2) pour cylindre de frein d'automobile (3) selon une ou plusieurs des revendications précédentes 1 à 11, **caractérisé en ce qu'**une première partie interface (9) du capuchon (1, 2) est élastiquement encliquetée dans une position radialement abaissée dans un siège équivalent radialement rainuré (12), ouvert vers l'extérieur, d'une face extérieure du logement (4), et qu'une seconde partie interface (10) du capuchon (1, 2) est élastiquement encliquetée dans une position radialement abaissée dans un siège équivalent radialement rainuré (13), ouvert vers l'extérieur, qui est agencé sur une face extérieure de l'élément d'actionnement (5, 6).

13. Capuchon pare-poussière flexible (1, 2) pour cylindre de frein d'automobile (3) selon une ou plusieurs des revendications précédentes 1 à 12, **caractérisé en ce que** la soupape de détente de pression est normalement fermée hermétiquement.
